# EUROPEAN PATENT APPLICATION

(11) **EP 4 266 719 A1**
(43) Date of publication of application: **25.10.2023**
(21) Application number: 21905610.8
(22) Date of filing: 09.12.2021
(51) Int. Cl.: H04W 4/70, H04W 24/04, H04W 28/04, H04L 1/18

(54) **SIDELINK TRANSMISSION PROCESSING METHOD AND APPARATUS, TERMINAL, AND NETWORK DEVICE**

(30) Priority: 15.12.2020 CN 202011481120
(71) Applicant: Vivo Mobile Communication Co., Ltd., Dongguan, Guangdong 523863 (CN)
(72) Inventor: ZHENG, Qian, Dongguan, Guangdong 523863 (CN); YANG, Xiaodong, Dongguan, Guangdong 523863 (CN)
(74) Representative: Conti, Marco
(86) International application number: PCT/CN2021/136726
(87) International publication number: WO 2022/127681

(57) **Abstract**

The present application discloses a sidelink transmission processing method and apparatus, a terminal, and a network device, and belongs to the field of communication technologies. The method includes: in a case that a sidelink is transmitted based on N carriers, determining, according to first entities associated with some or all of the N carriers, whether the sidelink satisfies a carrier failure condition, or determining, according to a first entity associated with each of the N carriers, whether the corresponding carrier satisfies a carrier reselection condition. N is an integer greater than 1, and the first entity includes at least one of a hybrid automatic repeat request (HARQ) entity and a radio link control (RLC) entity.

## Description

### CROSS-REFERENCE TO RELATED APPLICATIONS

This application claims priority to China Patent Application No. 202011481120.X filed in China on December 15, 2020, which is incorporated herein by reference in its entirety.

### TECHNICAL FIELD

The present application belongs to the field of communication technologies, and in particular, to a sidelink transmission processing method and apparatus, a terminal, and a network device.

### BACKGROUND

With the continuous development of mobile communication technologies, there are some mobile communication systems that support a sidelink (Sidelink, SL), and data may be directly transmitted between user equipments (User Equipment, UE) (also called terminals or terminal devices) based on the above sidelink. However, only a single-carrier scenario is taken into account in an existing SL radio link failure (Radio Link Failure, RLF) judgment mechanism, and there is no relevant solution for how to determine quality of a radio link in scenarios such as multi-carrier or carrier aggregation (Carrier Aggregation, CA) to find a poor state of the radio link, thereby affecting quality of sidelink communication.

### SUMMARY

Embodiments of the present application provide a sidelink transmission processing method and apparatus, a network device, and a terminal, which can determine quality of a radio link in scenarios such as multi-carrier or carrier aggregation to find a poor state of the radio link, so as to solve the problem of poor quality of sidelink communication in the existing technology.

In a first aspect, an embodiment of the present application provides a sidelink transmission processing method, the method including:
in a case that a sidelink is transmitted based on N carriers, determining, according to first entities associated with some or all of the N carriers, whether the sidelink satisfies a carrier failure condition, or determining, according to a first entity associated with each of the N carriers, whether the corresponding carrier satisfies a carrier reselection condition;
where N is an integer greater than 1, and the first entity includes at least one of a hybrid automatic repeat request (HARQ) entity and a radio link control (RLC) entity.

In a second aspect, an embodiment of the present application further provides a sidelink transmission processing method, the method including:
sending at least one of a maximum number of times of consecutive HARQ DTX and a maximum number of times of retransmission to a terminal.

In a third aspect, an embodiment of the present application provides a sidelink transmission processing apparatus, the apparatus including:
a judgment module configured to, in a case that a sidelink is transmitted based on N carriers, determine, according to first entities associated with some or all of the N carriers, whether the sidelink satisfies a carrier failure condition, or determine, according to a first entity associated with each of the N carriers, whether the corresponding carrier satisfies a carrier reselection condition;
where N is an integer greater than 1, and the first entity includes at least one of a hybrid automatic repeat request (HARQ) entity and a radio link control (RLC) entity.

In a fourth aspect, an embodiment of the present application further provides a sidelink transmission processing apparatus, the apparatus including:
a sending module configured to send at least one of a maximum number of times of consecutive HARQ DTX and a maximum number of times of retransmission to a terminal.

In a fifth aspect, an embodiment of the present application further provides a terminal, the terminal including a memory, a processor, and a program or instruction stored in the memory and capable of running on the processor, where steps of the method as described in the first aspect are implemented when the program or instruction is executed by the processor.

In a sixth aspect, an embodiment of the present application further provides a network device, the network device including a memory, a processor, and a program or instruction stored in the memory and capable of running on the processor, where steps of the method as described in the second aspect are implemented when the program or instruction is executed by the processor.

In a seventh aspect, an embodiment of the present application further provides a readable storage medium, the readable storage medium storing a program or instruction, where steps of the method as described in the first aspect or steps of the method as described in the second aspect are implemented when the program or instruction is executed by a processor.

In an eighth aspect, an embodiment of the present application further provides a chip, the chip including a processor and a communication interface, where the communication interface is coupled to the processor, and the processor is configured to run a program or instruction of a network device to implement the method as described in the first aspect or the method as described in the second aspect.

In a ninth aspect, a computer program product is provided, where the computer program product is stored in a non-volatile storage medium, and the computer program product is executed by at least one processor to implement the method as described in the first aspect or the method as described in the second aspect.

In the embodiments of the present application, in a case that a sidelink is transmitted based on N carriers, the terminal determines, according to first entities associated with some or all of the N carriers, whether the sidelink satisfies a carrier failure condition, or determines, according to a first entity associated with each of the N carriers, whether the corresponding carrier satisfies a carrier reselection condition; where N is an integer greater than 1, and the first entity includes at least one of a hybrid automatic repeat request (HARQ) entity and a radio link control (RLC) entity, which can determine quality of a radio link in scenarios such as multi-carrier or carrier aggregation to find a poor state of the radio link, thereby ensuring quality of sidelink communication.

### BRIEF DESCRIPTION OF THE DRAWINGS

FIG. 1 is a structural diagram of a network system to which an embodiment of the present application is applicable;
FIG. 2 is a flowchart of a sidelink transmission processing method according to an embodiment of the present application;
FIG. 3 is a schematic diagram of NR SL MAC according to an embodiment of the present application;
FIG. 4 is a flowchart of another sidelink transmission processing method according to an embodiment of the present application;
FIG. 5 is a structural diagram of a sidelink transmission processing apparatus according to an embodiment of the present application;
FIG. 6 is a structural diagram of another sidelink transmission processing apparatus according to an embodiment of the present application;
FIG. 7 is a structural diagram of a terminal according to an embodiment of the present application; and
FIG. 8 is a structural diagram of a network device according to an embodiment of the present application.

### DETAILED DESCRIPTION

The technical solutions in the embodiments of the present application will be clearly and completely described below with reference to the accompanying drawings in the embodiments of this application. Apparently, the described embodiments are some but not all of the embodiments of the present application. All other embodiments obtained by a person of ordinary skill in the art based on the embodiments of the present application without creative efforts shall fall within the protection scope of the present application.

Terms such as "first" and "second" used in the specification and the claims of the present application are intended to distinguish similar objects, but not to describe a specific order or sequence. It is to be understood that the terms used in such a way are interchangeable in appropriate circumstances so that the embodiments of the present application can be implemented in other orders than the order illustrated or described herein. Moreover, the objects distinguished by "first" and "second" are generally of one type, and a quantity of the objects is not limited. For example, there may be one or more first objects. In addition, "and/or" in the specification and the claims indicates at least one of connected objects, and the character "/" generally indicates that associated objects are in an "or" relationship.

It is to be noted that technologies described in the embodiments of the present application are not limited to long term evolution (Long Term Evolution, LTE)/LTE-Advanced (LTE-Advanced, LTE-A) systems, and may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of the present application are often used interchangeably. The technologies described may be applied to the systems and radio technologies mentioned above or applied to other systems and radio technologies. However, in the following descriptions, a new radio (New Radio, NR) system is described for an illustration purpose, and NR terms are used in most of the following descriptions, although these technologies may also be applied to other applications than an NR system application, such as a 6th generation (6th Generation, 6G) communication system.

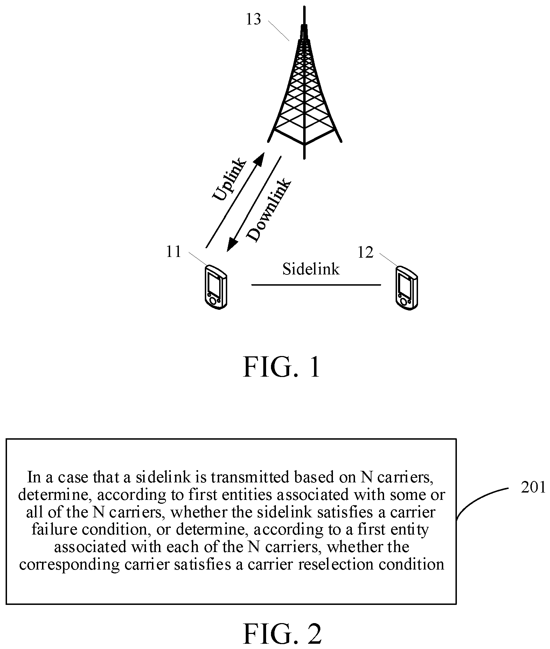

FIG. 1 is a block diagram of a wireless communication system to which an embodiment of the present application is applicable. The wireless communication system includes a first terminal 11, a second terminal 12, and a network device 13. The first terminal 11 and the second terminal 12 may also be referred to as terminal devices or user terminals (User Equipment, UE). The first terminal 11 and the second terminal 12 may be terminal-side devices such as mobile phones, tablet personal computers (Tablet Personal Computer), laptop computers (Laptop Computer) or notebook computers, personal digital assistants (Personal Digital Assistant, PDA), mobile Internet devices (MID), handheld computers, netbooks, ultra-mobile personal computers (ultra-mobile personal computer, UMPC), mobile Internet devices (Mobile Internet Device, MID), wearable devices (Wearable Device), vehicle-mounted equipments (VUE), or pedestrian terminals (PUE). The wearable devices include: wristbands, earphones, glasses, and the like. It is to be noted that specific types of the terminal 11 and the second terminal 12 are not limited in the embodiments of the present application. In addition, a quantity of the above second terminal 12 may be one or at least two.

The network device 13 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specific technical term. It is to be noted that, in the embodiments of the present application, the base station in the NR system is merely used as an example, and a specific type of the base station is not limited.

For ease of understanding, the following describes some content involved in the embodiments of the present application:

### Introduction to the sidelink (Sidelink, SL):

A long term evolution (Long Term Evolution, LTE) system starts to support a sidelink from Release 12, and the sidelink is used for direct data transmission between user equipments (User Equipment, UE) without using a network device.

Design of an LTE sidelink is applicable to specific public safety affairs (such as emergency communication in a fire disaster place or an earthquake disaster place), vehicle to everything (Vehicle to Everything, V2X) communication, or the like. The vehicle to everything communication includes various services, such as basic safety-related communication, autonomous driving, formation, and sensor extension. Since the LTE sidelink supports only broadcast communication, the LTE sidelink is mainly used for basic safety-related communication. Other advanced V2X services with a strict quality of service (Quality of Service, QoS) requirement in terms of latency, reliability, and the like are supported by a new radio (New Radio, NR) sidelink.

### Transmission form of the sidelink:

At present, sidelink transmission is mainly divided into several transmission forms: broadcast (Broadcast), groupcast (Groupcast), and unicast (Unicast). Unicast is one to one (one to one) transmission. Groupcast is one to many (one to many) transmission. Broadcast is one to many (one to many) transmission, but broadcast does not include a concept that UEs belong to a same group. Currently, sidelink unicast and multicast communication supports a hybrid automatic repeat request (HARM) feedback mechanism at a physical layer.

### Resource allocation mode of the sidelink:

Resource allocation modes of a sidelink UE are classified into the following two types:

Base station scheduling mode, i.e., Mode 1 (Mode 1): A base station schedules SL resources to be used by the UE for sidelink transmission. That is, a network-side device (base station) controls and allocates a resource to each UE.

UE autonomous mode, i.e., Mode 2 (Mode 2): The UE determines SL transmission resources within SL resources configured by a base station (Base Station, BS)/network or pre-configured SL resources, i.e., the BS does not perform scheduling, and each UE autonomously selects a resource.

### Sidelink radio link failure (Radio Link Failure, RLF) mechanism:

The sidelink UE performs sidelink unicast communication with a peer sidelink UE according to a destination address, and each destination address uniquely identifies a sidelink. When the sidelink UE determines that at least one of the following situations occurs:
a sidelink RLC entity corresponding to a specific destination address reaches a maximum number of times of retransmission;
a T400 timer corresponding to the specific destination address runs overtime;
a sidelink medium access control (Medium Access Control, MAC) entity corresponding to the specific destination address reaches a maximum number of times of consecutive HARQ DTX; and
an integrity protection failure occurs on a sidelink PDCP entity corresponding to the specific destination address;
it is determined that an RLF occurs on a sidelink of the above specific destination address.

If the sidelink UE determines that the RLF occurs on the sidelink of the above specific destination address, the sidelink of the above specific destination address may be released. A specific operation further includes:
releasing a data bearer of the sidelink of the above specific destination address;
releasing a signaling bearer of the sidelink of the above specific destination address;
discarding configuration of the sidelink of the above specific destination address;
resetting a MAC of the sidelink of the above specific destination address; and
reporting RLF information of the sidelink of the above specific destination address to the base station if the UE is in an RRC connection state.

The sidelink transmission processing method according to this embodiment of the present application is described in detail below with reference to the accompanying drawings through specific embodiments and application scenarios.

Referring to FIG. 2, FIG. 2 is a flowchart of a sidelink transmission processing method according to an embodiment of the present application. The method may be performed by a terminal, which, as shown in FIG. 2, includes the following steps:
In step 201, in a case that a sidelink is transmitted based on N carriers, it is determined, according to first entities associated with some or all of the N carriers, whether the sidelink satisfies a carrier failure condition, or determined, according to a first entity associated with each of the N carriers, whether the corresponding carrier satisfies a carrier reselection condition.

N is an integer greater than 1, and the first entity includes at least one of a hybrid automatic repeat request (HARQ) entity and a radio link control (RLC) entity.

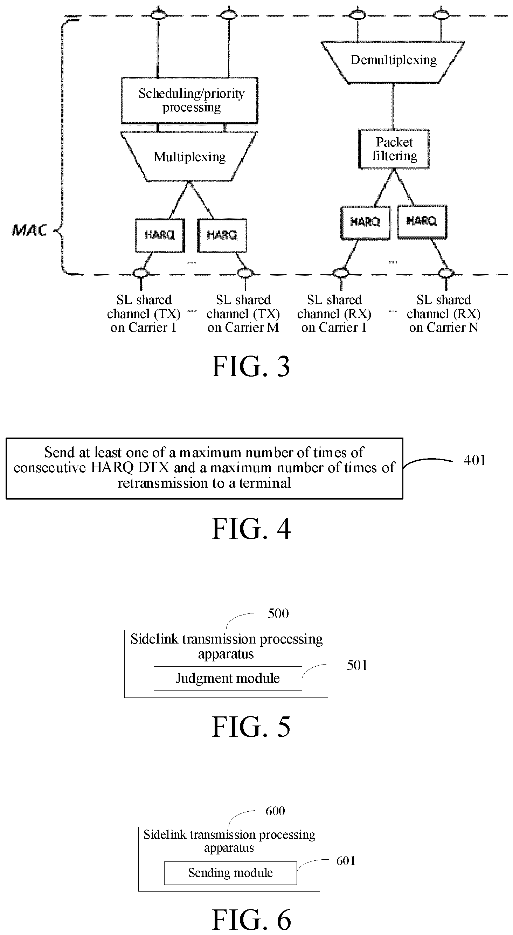

In this embodiment, the terminal may perform sidelink transmission based on a plurality of carriers. Optionally, the terminal may operate on the plurality of carriers for sidelink transmission at the same time, or operate on different carriers for sidelink transmission at different times. For example, as shown in FIG. 3, HARQ entities are in one-to-one correspondence to carriers.

For ease of description, the following description is based on an example in which the first terminal performs the sidelink transmission processing method according to this embodiment of the present application. The first terminal may be any terminal. The first terminal and the second terminal establish a sidelink communication connection, for example, a unicast connection, so that the first terminal and the second terminal can perform sidelink transmission or sidelink communication, for example, unicast communication, based on the above sidelink connection. The above sidelink transmission may be performed based on a plurality of carriers. Optionally, the above sidelink transmission may operate on the plurality of carriers at the same time or operate on different carriers at different times.

It is to be noted that the above sidelink may be distinguished through a destination address (i.e., destination). That is, each destination address uniquely identifiers a sidelink. In addition, the first terminal and the second terminal described above may be any two different terminals. The first terminal may establish a sidelink communication connection between one or more second terminals. In a case that the first terminal establishes a sidelink communication connection with the second terminals, the sidelink in step 201 may be any one of sidelinks between the first terminal and the second terminals.

The above sidelink communication or sidelink transmission may include sending and receiving of data and/or signaling related to the sidelink, for example, PCS RRC signaling, PC5-S signaling, PCS discovery (discovery) signaling, service data, and the like. In addition, the data and/or signaling for the above sidelink communication or sidelink transmission may be borne through at least one logical channel (LCID).

The above first entity may include, but is not limited to, a HARQ entity and a radio link control (Radio Link Control, RLC) entity. The first entity associated with the above carrier may include a first entity directly associated with the above carrier. For example, as shown in FIG. 2, one carrier is associated with one HARQ entity. The first entity may also be a first entity indirectly associated with the above carrier. For example, one carrier is associated with at least one logical channel, and one logical channel is associated with at least one RLC entity.

For step 201, in an implementation, in a case that the sidelink is transmitted based on the N carriers, the terminal may determine, according to the first entities associated with some or all of the N carriers, whether the sidelink satisfies the carrier failure condition. For example, it may be determined, according to the first entities associated with all of the N carriers, whether the sidelink satisfies the carrier failure condition, or determined, according to the first entity associated with one of the N carriers, whether the sidelink satisfies the carrier failure condition.

Optionally, according to this embodiment of the present application, it may be determined, according to numbers of times of consecutive HARQ DTX of HARQ entities associated with some or all of the N carriers, whether the sidelink satisfies the carrier failure condition, or determined, according to numbers of times of retransmission of RLC entities associated with some or all of the N carriers, whether the sidelink satisfies the carrier failure condition.

In another implementation, in a case that the sidelink is transmitted based on the N carriers, the terminal may determine, according to the first entity associated with each of the N carriers, whether the corresponding carrier satisfies the carrier reselection condition. That is, if the N carriers include CC1 to CCN, it may be determined, according to a first entity associated with CC1, whether CC1 satisfies the carrier reselection condition, determined, according to a first entity associated with CC2, whether CC2 satisfies the carrier reselection condition, and so on.

Optionally, according to this embodiment of the present application, it may be determined, according to a number of times of consecutive HARQ DTX of a HARQ entity associated with each of the N carriers, whether the corresponding carrier satisfies the carrier reselection condition, or determined, according to a number of times of retransmission of an RLC entity associated with each of the N carriers, whether the corresponding carrier satisfies the carrier reselection condition.

Based on the sidelink transmission processing method according to this embodiment of the present application, in a case that the sidelink is transmitted based on the N carriers, the terminal determines, according to the first entities associated with some or all of the N carriers, whether the sidelink satisfies the carrier failure condition, or determines, according to the first entity associated with each of the N carriers, whether the corresponding carrier satisfies the carrier reselection condition, which can determine quality of a radio link in scenarios such as multi-carrier or carrier aggregation and then can quickly find and process a poor state of the radio link in the scenarios such as multi-carrier or carrier aggregation, thereby ensuring quality of sidelink communication.

Optionally, the sidelink satisfying a carrier failure condition may include at least one of the following:
a number of times of consecutive HARQ discontinuous transmission DTX of a HARQ entity associated with the first carrier reaching a corresponding maximum number of times of consecutive HARQ DTX;
a cumulative number of times of consecutive HARQ DTX of HARQ entities associated with all carriers of a first carrier set reaching the corresponding maximum number of times of consecutive HARQ DTX, or a number of times of consecutive HARQ DTX of a HARQ entity associated with each carrier in the first carrier set reaching the corresponding maximum number of times of consecutive HARQ DTX;
a number of times of retransmission of an RLC entity associated with a first logical channel reaching a corresponding maximum number of times of RLC retransmission; and
a cumulative number of times of retransmission of RLC entities associated with all logical channels of a first logical channel set reaching the corresponding maximum number of times of RLC retransmission, or a number of times of retransmission of an RLC entity associated with each logical channel in the first logical channel set reaching the corresponding maximum number of times of RLC retransmission.

The first carrier is one of the N carriers, the first carrier set includes at least two of the N carriers, the first logical channel is one of logical channels associated with the N carriers, and the first logical channel set includes at least two of the logical channels associated with the N carriers.

In this embodiment, the above first carrier may be any one of the N carriers, or one of the N carriers where a PCS RRC connection is located, or a designated one of the N carriers, or one of the N carriers with the best signal quality, or one of the N carriers with the worst signal quality, or the like. The above first carrier set may include at least two of the N carriers, which, for example, may include a plurality of specific carriers in the N carriers, such as a plurality of carriers designated by a network device or a plurality of carriers satisfying a first preset condition. The above first preset condition may be pre-configured by the terminal, indicated by the network device, or pre-defined by a protocol.

In addition, according to this embodiment of the present application, logical channels and carriers may be pre-associated. For example, one carrier may be associated with at least one logical channel, and one logical channel may also be associated with at least one carrier. The above first logical channel may be one of the logical channels associated with the N carriers, which may be, for example, any one of the logical channels associated with the N carriers, or one of the logical channels associated with the N carriers where the PCS RRC connection is located, or a designated one of the logical channels associated with the N carriers, or one of the logical channels associated with the N carriers that has the best channel quality, or the like. The above first logical channel set may include at least two of the logical channels associated with the N carriers. Optionally, the above first logical channel set may include any number of logical channels in the logical channels associated with the N carriers, or include a plurality of specific logical channels in the logical channels associated with the N carriers, such as a plurality of logical channels designated by the network device or a plurality of logical channels satisfying a second preset condition. The above second preset condition may be pre-configured by the terminal, indicated by the network device, or pre-defined by the protocol.

The above maximum number of times of consecutive HARQ DTX may be configured by the network device, or pre-configured by the terminal, or pre-defined by the protocol. Similarly, the above maximum number of times of RLC retransmission may be configured by the network device, or pre-configured by the terminal, or pre-defined by the protocol.

Optionally, signaling configuration granularity of the above maximum number of times of consecutive HARQ DTX may be one of the following: each terminal; each sidelink; each carrier; and each HARQ entity.

In practical applications, a corresponding maximum number of times of consecutive HARQ DTX may be configured for each terminal, and different terminals correspond to different maximum numbers of times of consecutive HARQ DTX; or a corresponding maximum number of times of consecutive HARQ DTX is configured for each sidelink, and different sidelinks correspond to different maximum numbers of times of consecutive HARQ DTX; or a corresponding maximum number of times of consecutive HARQ DTX is configured for each carrier, and different carriers correspond to different maximum numbers of times of consecutive HARQ DTX; or a corresponding maximum number of times of consecutive HARQ DTX is configured for each HARQ entity, and different HARQ entities correspond to different maximum numbers of times of consecutive HARQ DTX.

Optionally, signaling configuration granularity of the above maximum number of times of RLC retransmission may be one of the following: each terminal; each sidelink; and each RLC entity.

In practical applications, a corresponding maximum number of times of RLC retransmission may be configured for each terminal, and different terminals correspond to different maximum numbers of times of RLC retransmission; or a corresponding maximum number of times of RLC retransmission is configured for each sidelink, and different sidelinks correspond to different maximum numbers of times of RLC retransmission; or a corresponding maximum number of times of RLC retransmission is configured for each RLC entity, and different RLC entities correspond to different maximum numbers of times of RLC retransmission.

Optionally, in this embodiment of the present application, different terminals or different sidelinks or different carriers or different HARQ may also all correspond to a same maximum number of times of consecutive HARQ DTX. Similarly, different terminals or different sidelinks or different RLC entities may also all correspond to a same maximum number of times of RLC retransmission.

Specifically, in a case that the number of times of consecutive HARQ discontinuous transmission DTX of the HARQ entity associated with the first carrier reaches the corresponding maximum number of times of consecutive HARQ DTX and the signaling configuration granularity of the maximum number of times of consecutive HARQ DTX is each terminal, the above corresponding maximum number of times of consecutive HARQ DTX may be a maximum number of times of consecutive HARQ DTX corresponding to a terminal corresponding to the first carrier. In a case that the signaling configuration granularity of the maximum number of times of consecutive HARQ DTX is each sidelink, the above corresponding maximum number of times of consecutive HARQ DTX may be a maximum number of times of consecutive HARQ DTX corresponding to a sidelink corresponding to the first carrier. In a case that the signaling configuration granularity of the maximum number of times of consecutive HARQ DTX is each carrier or HARQ entity, the above corresponding maximum number of times of consecutive HARQ DTX may be a maximum number of times of consecutive HARQ DTX corresponding to the above first carrier or a HARQ entity associated with the first carrier. In a case that different terminals or different sidelinks or different carriers or different HARQ entities all correspond to a same maximum number of times of consecutive HARQ DTX, the above corresponding maximum number of times of consecutive HARQ DTX may be the maximum number of times of consecutive HARQ DTX.

In a case that the cumulative number of times of consecutive HARQ DTX of the HARQ entities associated with all carriers of the first carrier set reaches the corresponding maximum number of times of consecutive HARQ DTX and the signaling configuration granularity of the maximum number of times of consecutive HARQ DTX is each terminal, the above corresponding maximum number of times of consecutive HARQ DTX may be a maximum number of times of consecutive HARQ DTX corresponding to a terminal corresponding to the first carrier set. In a case that the signaling configuration granularity of the maximum number of times of consecutive HARQ DTX is each sidelink, the above corresponding maximum number of times of consecutive HARQ DTX may be a maximum number of times of consecutive HARQ DTX corresponding to a sidelink corresponding to the first carrier set. In a case that the signaling configuration granularity of the maximum number of times of consecutive HARQ DTX is each carrier or HARQ entity, the above corresponding maximum number of times of consecutive HARQ DTX may be a maximum number of times of consecutive HARQ DTX corresponding to the above first carrier set or a HARQ entity associated with the first carrier set. For example, a maximum one is a maximum number of times of consecutive HARQ DTX corresponding to a designated carrier in the first carrier set or a preset maximum number of times of consecutive HARQ DTX. In a case that different terminals or different sidelinks or different carriers or different HARQ entities all correspond to a same maximum number of times of consecutive HARQ DTX, the above corresponding maximum number of times of consecutive HARQ DTX may be the maximum number of times of consecutive HARQ DTX.

Similarly, in a case that the number of times of retransmission of the RLC entity associated with the first logical channel reaches the corresponding maximum number of times of RLC retransmission and the signaling configuration granularity of the maximum number of times of RLC retransmission is each terminal, the above corresponding maximum number of times of RLC retransmission may be a maximum number of times of RLC retransmission corresponding to a terminal corresponding to the first logical channel. In a case that the signaling configuration granularity of the maximum number of times of RLC retransmission is each sidelink, the above corresponding maximum number of times of RLC retransmission may be a maximum number of times of RLC retransmission corresponding to a sidelink corresponding to the first logical channel. In a case that the signaling configuration granularity of the maximum number of times of RLC retransmission is an RLC entity, the above corresponding maximum number of times of RLC retransmission may be a maximum number of times of RLC retransmission corresponding to an RLC entity corresponding to the first logical channel. In a case that different terminals or different sidelinks or different RLC entities all correspond to a same maximum number of times of RLC retransmission, the above corresponding maximum number of times of RLC retransmission may be the maximum number of times of RLC retransmission.

In a case that the cumulative number of times of retransmission of the RLC entities associated with all logical channels of the above first logical channel set reaches the corresponding maximum number of times of RLC retransmission and the signaling configuration granularity of the maximum number of times of RLC retransmission is each terminal, the above corresponding maximum number of times of RLC retransmission may be a maximum number of times of RLC retransmission corresponding to a terminal corresponding to the first logical channel set. In a case that the signaling configuration granularity of the maximum number of times of RLC retransmission is each sidelink, the above corresponding maximum number of times of RLC retransmission may be a maximum number of times of RLC retransmission corresponding to a sidelink corresponding to the first logical channel set. In a case that the signaling configuration granularity of the maximum number of times of RLC retransmission is an RLC entity, the above corresponding maximum number of times of RLC retransmission may be one of maximum numbers of times of RLC retransmission corresponding to an RLC entity associated with the first logical channel set. For example, a maximum one is a maximum number of times of RLC retransmission corresponding to a designated logical channel in the first logical channel set or a preset maximum number of times of RLC retransmission. In a case that different terminals or different sidelinks or different RLC entities all correspond to a same maximum number of times of RLC retransmission, the above corresponding maximum number of times of RLC retransmission may be the maximum number of times of RLC retransmission.

In this embodiment of the present application, it is determined, according to whether a number of times of consecutive HARQ DTX of a HARQ entity associated with the first carrier and/or the first carrier set reaches the corresponding maximum number of times of consecutive HARQ DTX and whether a number of times of retransmission of an RLC entity associated with the first logical channel and/or the first logical channel set reaches the corresponding maximum number of times of RLC retransmission, whether the sidelink satisfies the carrier failure condition, so that the poor state of the radio link can be found more accurately.

Optionally, the first carrier may be one of the following:
any one of the N carriers;
one of the N carriers where a PCS radio resource control (RRC) connection is located; and
a designated one of the N carriers.

In this embodiment, the designated one of the N carriers is, for example, one of the N carriers that is designated by the network device, or an M^{th} one of the N carriers, or one of the N carriers that has the best signal quality, or the like. M is an integer greater than 0 and less than or equal to N.

Optionally, the first logical channel is one of the following:
any one of the logical channels associated with the N carriers;
one of the logical channels associated with the N carriers where a PCS RRC connection is located; and
a designated one of the logical channels associated with the N carriers.

In this embodiment, the designated one of the logical channels associated with the N carriers is, for example, one of logical channels associated with the N carriers that is designated by the network device, or one of the logical channels associated with the N carriers that has the best channel quality, or the like.

Optionally, in a case that it is determined that the sidelink satisfies the carrier failure condition, the method may further include at least one of the following:
determining that a radio link failure (RLF) occurs on the sidelink;
releasing a PCS RRC connection corresponding to the sidelink; and
stopping data transmission on the sidelink.

In an implementation, in a case that it is determined that the sidelink satisfies the carrier failure condition, it may be determined that an RLF occurs on the sidelink, and related processing procedures of the RLF of the sidelink may be further performed, for example, releasing a data bearer of the sidelink, releasing a signaling bearer of the sidelink, discarding configuration of the sidelink, resetting MAC of the sidelink, reporting RLF information of the sidelink to the network device, and the like.

In another implementation, alternatively, in a case that it is determined that the sidelink satisfies the carrier failure condition, the PCS RRC connection corresponding to the sidelink may be directly released, reducing occupation of resources by radio links with poor quality.

In another implementation, alternatively, in a case that it is determined that the sidelink satisfies the carrier failure condition, data transmission on the sidelink may be directly stopped, reducing data loss caused by the poor quality of the radio links.

In another implementation, alternatively, in a case that it is determined that the sidelink satisfies the carrier failure condition, it may be determined that an RLF occurs on the sidelink, the PCS RRC connection corresponding to the sidelink may be released, and data transmission on the sidelink may be stopped, which can reduce occupation of resources by radio links with poor quality and reduce data loss caused by the poor quality of the radio links.

Optionally, in this embodiment of the present application, in a case that the sidelink satisfying the carrier failure condition is the cumulative number of times of consecutive HARQ DTX of the HARQ entities associated with all of the N carriers reaching the corresponding maximum number of times of consecutive HARQ DTX, or the number of times of consecutive HARQ DTX of the HARQ entity associated with each of the N carriers reaching the corresponding maximum number of times of consecutive HARQ DTX, or the cumulative number of times of retransmission of the RLC entities associated with all of the logical channels associated with the N carriers reaching the corresponding maximum number of times of RLC retransmission, or the number of times of retransmission of the RLC entity associated with each of the logical channels associated with the N carriers reaching the corresponding maximum number of times of RLC retransmission, it may be determined that the radio link failure RLF occurs on the sidelink, the PCS RRC connection corresponding to the sidelink is released, and data transmission on the sidelink is stopped.

Optionally, in a case that it is determined that the sidelink satisfies the carrier failure condition, the method further includes at least one of the following:
maintaining a PCS RRC connection of the sidelink;
stopping sidelink transmission on a failed carrier; and
initiating a carrier reselection process for the failed carrier or sending first report information to a network device, where the first report information is used for indicating at least one of the failed carrier and a destination address of a sidelink corresponding to the failed carrier.

In an implementation, in a case that it is determined that the sidelink satisfies the carrier failure condition, the PCS RRC connection of the sidelink may be maintained, so that the terminal can continue sidelink transmission on carriers where no failure occurs.

In another implementation, in a case that it is determined that the sidelink satisfies the carrier failure condition, sidelink transmission on the failed carrier may be stopped, which can reduce data loss caused by carrier failures. The above failed carrier is, for example, the above first carrier or a carrier in the first carrier set or a carrier associated with the first logical channel or a carrier associated with the first logical channel set.

In another implementation, in a case that it is determined that the sidelink satisfies the carrier failure condition, the terminal may autonomously initiate a carrier reselection process for the failed carrier to select a new carrier for sidelink transmission; or send the first report information to the network device to report the failed carrier and/or a destination address of a sidelink corresponding to the failed carrier to the network device, so that the network device can schedule the terminal to perform sidelink transmission on the new carrier.

In another implementation, in a case that it is determined that the sidelink satisfies the carrier failure condition, the PCS RRC connection of the sidelink may be maintained, sidelink transmission on the failed carrier is stopped, and a carrier reselection process is initiated for the failed carrier, or the first report information is sent to the network device. In this way, sidelink transmission on a carrier with good quality can be maintained, and a new carrier can be selected for sidelink transmission for a carrier with poor quality, which can improve an effect of sidelink communication.

Optionally, in this embodiment of the present application, in a case that the sidelink satisfying the carrier failure condition is the cumulative number of times of consecutive HARQ DTX of the HARQ entities associated with some of the N carriers reaching the corresponding maximum number of times of consecutive HARQ DTX, or the number of times of consecutive HARQ DTX of the HARQ entity associated with each of some of the N carriers reaching the corresponding maximum number of times of consecutive HARQ DTX, or the cumulative number of times of retransmission of the RLC entities associated with some of the logical channels associated with the N carriers reaching the corresponding maximum number of times of RLC retransmission, or the number of times of retransmission of the RLC entity associated with each of some of the logical channels associated with the N carriers reaching the corresponding maximum number of times of RLC retransmission, if the terminal operates in the above Mode 2, the PCS RRC connection of the sidelink is maintained, sidelink transmission on the failed sidelink is stopped, and a carrier reselection process is initiated for the failed carrier. If the terminal operates in the above Mode 1, the PCS RRC connection of the sidelink is maintained, sidelink transmission on the failed sidelink is stopped, and the first report information is sent to the network device.

Optionally, a second carrier satisfying the carrier reselection condition includes at least one of the following:
a number of times of consecutive HARQ discontinuous transmission DTX of a HARQ entity associated with the second carrier reaching a corresponding maximum number of times of consecutive HARQ DTX;
a number of times of retransmission of an RLC entity associated with a second logical channel reaching a corresponding maximum number of times of RLC retransmission; and
a cumulative number of times of retransmission of RLC entities associated with all logical channels of a second logical channel set reaching the corresponding maximum number of times of RLC retransmission, or a number of times of retransmission of an RLC entity associated with each logical channel in the second logical channel set reaching the corresponding maximum number of times of RLC retransmission.

The second carrier is any one of the N carriers, the second logical channel is one of logical channels associated with the second carrier, and the second logical channel set includes at least two of the logical channels associated with the second carrier.

In this embodiment of the present application, the above second carrier may be any one of the N carriers.

The above second logical channel may be one of the logical channels associated with the second carrier, which may be, for example, any one of the logical channels associated with the second carrier, or one of the logical channels associated with the second carrier that has the best channel quality, or one of the logical channels associated with the second carrier that has the worst channel quality, or a designated one of the logical channels associated with the second carrier, or the like.

The above second logical channel set may include at least two of the logical channels associated with the second carrier. Optionally, the above second logical channel set may include any number of logical channels in the logical channels associated with the second carrier, or include a plurality of specific logical channels in the logical channels associated with the second carrier, such as a plurality of logical channels designated by a network device or a plurality of logical channels satisfying a third preset condition. The above third preset condition may be pre-configured by the terminal, indicated by the network device, or pre-defined by the protocol.

The above maximum number of times of consecutive HARQ DTX may be configured by the network device, or pre-configured by the terminal, or pre-defined by the protocol. Similarly, the above maximum number of times of RLC retransmission may be configured by the network device, or pre-configured by the terminal, or pre-defined by the protocol.

Optionally, signaling configuration granularity of the above maximum number of times of consecutive HARQ DTX may be one of the following: each terminal; each sidelink; each carrier; and each HARQ entity.

In practical applications, a corresponding maximum number of times of consecutive HARQ DTX may be configured for each terminal, and different terminals correspond to different maximum numbers of times of consecutive HARQ DTX; or a corresponding maximum number of times of consecutive HARQ DTX is configured for each sidelink, and different sidelinks correspond to different maximum numbers of times of consecutive HARQ DTX; or a corresponding maximum number of times of consecutive HARQ DTX is configured for each carrier, and different carriers correspond to different maximum numbers of times of consecutive HARQ DTX; or a corresponding maximum number of times of consecutive HARQ DTX is configured for each HARQ entity, and different HARQ entities correspond to different maximum numbers of times of consecutive HARQ DTX.

Optionally, signaling configuration granularity of the above maximum number of times of RLC retransmission may be one of the following: each terminal; each sidelink; and each RLC entity.

In practical applications, a corresponding maximum number of times of RLC retransmission may be configured for each terminal, and different terminals correspond to different maximum numbers of times of RLC retransmission; or a corresponding maximum number of times of RLC retransmission is configured for each sidelink, and different sidelinks correspond to different maximum numbers of times of RLC retransmission; or a corresponding maximum number of times of RLC retransmission is configured for each RLC entity, and different RLC entities correspond to different maximum numbers of times of RLC retransmission.

Optionally, in this embodiment of the present application, different terminals or different sidelinks or different carriers or different HARQ may also all correspond to a same maximum number of times of consecutive HARQ DTX. Similarly, different terminals or different sidelinks or different RLC entities may also all correspond to a same maximum number of times of RLC retransmission.

Optionally, in the case of concurrence of judgment of the carrier failure condition and judgment of the carrier reselection condition, in this embodiment of the present application, the maximum number of times of consecutive HARQ DTX and the maximum number of times of RLC retransmission for the judgment of the carrier failure condition may be different from the maximum number of times of consecutive HARQ DTX and the maximum number of times of RLC retransmission for the judgment of the carrier reselection condition. That is, a set of a maximum number of times of consecutive HARQ DTX and a maximum number of times of RLC retransmission for the judgment of the carrier failure condition and a set of a maximum number of times of consecutive HARQ DTX and a maximum number of times of RLC retransmission for the judgment of the carrier reselection condition may be configured respectively.

In this embodiment of the present application, it is determined, according to whether a number of times of consecutive HARQ DTX of a HARQ entity associated with the second carrier reaches the corresponding maximum number of times of consecutive HARQ DTX and whether a number of times of retransmission of an RLC entity associated with the second logical channel and/or the second logical channel set reaches the corresponding maximum number of times of RLC retransmission, whether the sidelink satisfies the carrier failure condition, so that poor quality of the radio link can be found more accurately.

Optionally, the second logical channel is one of the following:
any one of the logical channels associated with the second carrier; and
a designated one of the logical channels associated with the second carrier.

In this embodiment, the designated one of the logical channels associated with the second carrier is, for example, one of logical channels associated with the second carrier that is designated by the network device, or one of the logical channels associated with the second carrier that has the best channel quality, or the like.

Optionally, in a case that it is determined that a third carrier satisfies the carrier reselection condition, the method further includes at least one of the following:
determining that a radio link failure (RLF) occurs on the sidelink;
releasing a PCS RRC connection corresponding to the sidelink; and
stopping data transmission on the sidelink.

The third carrier is any one of the N carriers.

In an implementation, in a case that it is determined that the third carrier satisfies the carrier reselection condition, it may be determined that an RLF occurs on the sidelink, and related processing procedures of the RLF of the sidelink may be further performed, for example, releasing a data bearer of the sidelink, releasing a signaling bearer of the sidelink, discarding configuration of the sidelink, resetting MAC of the sidelink, reporting RLF information of the sidelink to the network device, and the like.

In another implementation, alternatively, in a case that it is determined that the third carrier satisfies the carrier reselection condition, the PCS RRC connection corresponding to the sidelink may be directly released, reducing occupation of resources by radio links with poor quality.

In another implementation, alternatively, in a case that it is determined that the third carrier satisfies the carrier reselection condition, data transmission on the sidelink may be directly stopped, reducing data loss caused by the poor quality of the radio links.

In another implementation, alternatively, in a case that it is determined that the third carrier satisfies the carrier reselection condition, it may be determined that an RLF occurs on the sidelink, the PCS RRC connection corresponding to the sidelink may be released, and data transmission on the sidelink may be stopped, which can reduce occupation of resources by radio links with poor quality and reduce data loss caused by the poor quality of the radio links.

Optionally, in this embodiment of the present application, in a case that each of the N carriers satisfies the above carrier reselection condition, it may be determined that a radio link failure (RLF) occurs on the sidelink, the PCS RRC connection corresponding to the sidelink may be released, and data transmission on the sidelink may be stopped.

Optionally, in a case that it is determined that a fourth carrier satisfies the carrier reselection condition, the method further includes at least one of the following:
maintaining a PCS RRC connection of the sidelink;
stopping sidelink transmission on the fourth carrier; and
initiating a carrier reselection process for the fourth carrier or sending second report information to a network device, where the second report information is used for indicating at least one of a carrier that triggers carrier reselection and a destination address of a sidelink corresponding to the carrier that triggers carrier reselection.

The fourth carrier is any one of the N carriers.

In this embodiment of the present application, the above fourth carrier may be any one of the N carriers. Only the fourth carrier is taken as an example in this embodiment of the present application, and any carrier satisfying the carrier reselection condition is applicable to the above processing manner.

In an implementation, in a case that it is determined that the fourth carrier satisfies the carrier reselection condition, the PCS RRC connection of the sidelink may be maintained, so that the terminal can continue sidelink transmission on carriers not satisfying the carrier reselection condition.

In another implementation, in a case that it is determined that the fourth carrier satisfies the carrier reselection condition, sidelink transmission on the fourth carrier may be stopped, that is, sidelink transmission on a carrier satisfying the carrier reselection condition is stopped, or sidelink transmission on a carrier triggering carrier reselection is stopped, which can reduce data loss caused by carrier failures.

In another implementation, in a case that it is determined that the fourth carrier satisfies the carrier reselection condition, the terminal may autonomously initiate a carrier reselection process for the fourth carrier to select a new carrier for sidelink transmission; or send the second report information to the network device to report the carrier triggering carrier reselection, that is, the above fourth carrier, and/or a destination address of a sidelink corresponding to the carrier triggering carrier reselection to the network device, so that the network device can schedule the terminal to perform sidelink transmission on the new carrier.

In another implementation, in a case that it is determined that the fourth carrier satisfies the carrier reselection condition, the PCS RRC connection of the sidelink may be maintained, sidelink transmission on the fourth carrier is stopped, and a carrier reselection process is initiated for the fourth carrier, or the second report information is sent to the network device. In this way, sidelink transmission on a carrier with good quality can be maintained, and a new carrier can be selected for sidelink transmission for a carrier with poor quality, which can improve an effect of sidelink communication.

Optionally, in this embodiment of the present application, in a case that only some of the N carriers satisfy the above carrier reselection condition, if the terminal operates in the above Mode 2, the PCS RRC connection of the sidelink is maintained, sidelink transmission on the carrier satisfying the above carrier reselection condition is stopped, and a carrier reselection process is initiated for the carrier satisfying the above carrier reselection condition. If the terminal operates in the above Mode 1, the PCS RRC connection of the sidelink is maintained, sidelink transmission on the carrier satisfying the above carrier reselection condition is stopped, and the second report information is sent to the network device.

Referring to FIG. 4, FIG. 4 is a flowchart of another sidelink transmission processing method according to an embodiment of the present application. The method may be performed by a network device, which, as shown in FIG. 4, includes the following steps:

In step 401, at least one of a maximum number of times of consecutive HARQ DTX and a maximum number of times of retransmission is sent to a terminal.

In this embodiment of the present application, signaling configuration granularity of the above maximum number of times of consecutive HARQ DTX may be one of the following: each terminal; each sidelink; each carrier; and each HARQ entity. Signaling configuration granularity of the above maximum number of times of RLC retransmission may be one of the following: each terminal; each sidelink; and each RLC entity. Optionally, different terminals or different sidelinks or different carriers or different HARQ may also all correspond to a same maximum number of times of consecutive HARQ DTX or a same maximum number of times of RLC retransmission.

Optionally, in the case of concurrence of judgment of the carrier failure condition and judgment of the carrier reselection condition by the terminal, in this embodiment of the present application, a set of a maximum number of times of consecutive HARQ DTX and a maximum number of times of RLC retransmission for the judgment of the carrier failure condition and a set of a maximum number of times of consecutive HARQ DTX and a maximum number of times of RLC retransmission for the judgment of the carrier reselection condition may be respectively configured for the terminal.

Based on the sidelink transmission processing method according to this embodiment of the present application, in a case that the terminal performs sidelink transmission based on the N carriers, at least one of the maximum number of times of consecutive HARQ DTX and the maximum number of times of RLC retransmission may be sent to the terminal, so that the terminal can determine, based on whether numbers of times of consecutive HARQ DTX of HARQ entities associated with all or some of the N carriers reach a corresponding maximum number of times of consecutive HARQ DTX and whether numbers of times of retransmission of RLC entities associated with all or some of the N carriers reach a corresponding maximum number of times of RLC retransmission, whether the sidelink satisfies the carrier failure condition, or determine, according to whether a number of times of consecutive HARQ DTX of a HARQ entity associated with each of the N carriers reaches the corresponding maximum number of times of consecutive HARQ DTX, whether the carrier satisfies the carrier reselection condition, and determine, according to whether the number of times of retransmission of the RLC entity associated with each of the N carriers reaches the corresponding maximum number of times of RLC retransmission, whether the carrier satisfies the carrier reselection condition, so that the poor quality of the radio link can be found more accurately.

Optionally, different terminals correspond to different maximum numbers of times of consecutive HARQ DTX;
or
different sidelinks correspond to different maximum numbers of times of consecutive HARQ DTX;
   or
different carriers correspond to different maximum numbers of times of consecutive HARQ DTX;
   or
different HARQ entities correspond to different maximum numbers of times of consecutive HARQ DTX;
   or
different terminals correspond to a same maximum number of times of consecutive HARQ DTX;
   or
different sidelinks correspond to a same maximum number of times of consecutive HARQ DTX;
   or
different carriers correspond to a same maximum number of times of consecutive HARQ DTX;
   or
different HARQ entities correspond to a same maximum number of times of consecutive HARQ DTX.

Optionally, different terminals correspond to different maximum numbers of times of RLC retransmission;
or
different sidelinks correspond to different maximum numbers of times of RLC retransmission;
   or
different RLC entities correspond to different maximum numbers of times of RLC retransmission;
   or
different terminals correspond to a same maximum number of times of RLC retransmission;
   or
different sidelinks correspond to a same maximum number of times of RLC retransmission;
   or
different RLC entities correspond to a same maximum number of times of RLC retransmission.

Optionally, the method may further include:
receiving report information sent by the terminal.

The report information is used for indicating at least one of a failed carrier and a destination address of a sidelink corresponding to the failed carrier, or the report information is used for indicating at least one of a carrier that triggers carrier reselection and a destination address of a sidelink corresponding to the carrier that triggers carrier reselection.

In this embodiment of the present application, the network device may receive report information sent by the terminal in a case that the sidelink of the terminal satisfies the above carrier failure condition or a carrier for sidelink transmission satisfies the above carrier reselection condition, so that the network device can schedule a new carrier for the terminal to perform sidelink transmission based on the above report information.

It is to be noted that this embodiment is an implementation of the network device corresponding to the embodiment shown in FIG. 2. A specific implementation thereof may be obtained with reference to the relevant description of the embodiment shown in FIG. 2, and a same beneficial effect can be achieved. Details are not described herein again so as to avoid repeated description.

It is to be noted that the sidelink transmission processing method according to this embodiment of the present application is applicable to scenarios such as NR SL multi-carrier, carrier aggregation, and SL relay (Relay). The SL relay may include user equipment to network (UE-to-Network, U2N) relay and user equipment to user equipment (UE-to-UE, U2U) relay.

Referring to FIG. 5, FIG. 5 is a structural diagram of a sidelink transmission processing apparatus according to an embodiment of the present application. As shown in FIG. 5, the sidelink transmission processing apparatus 500 includes:
a judgment module 501 configured to, in a case that a sidelink is transmitted based on N carriers, determine, according to first entities associated with some or all of the N carriers, whether the sidelink satisfies a carrier failure condition, or determine, according to a first entity associated with each of the N carriers, whether the corresponding carrier satisfies a carrier reselection condition.

N is an integer greater than 1, and the first entity includes at least one of a hybrid automatic repeat request (HARQ) entity and a radio link control (RLC) entity.

Optionally, the sidelink satisfying a carrier failure condition includes at least one of the following:
a number of times of consecutive HARQ discontinuous transmission DTX of a HARQ entity associated with the first carrier reaching a corresponding maximum number of times of consecutive HARQ DTX;
a cumulative number of times of consecutive HARQ DTX of HARQ entities associated with all carriers of a first carrier set reaching the corresponding maximum number of times of consecutive HARQ DTX, or a number of times of consecutive HARQ DTX of a HARQ entity associated with each carrier in the first carrier set reaching the corresponding maximum number of times of consecutive HARQ DTX;
a number of times of retransmission of an RLC entity associated with a first logical channel reaching a corresponding maximum number of times of RLC retransmission; and
a cumulative number of times of retransmission of RLC entities associated with all logical channels of a first logical channel set reaching the corresponding maximum number of times of RLC retransmission, or a number of times of retransmission of an RLC entity associated with each logical channel in the first logical channel set reaching the corresponding maximum number of times of RLC retransmission.

The first carrier is one of the N carriers, the first carrier set includes at least two of the N carriers, the first logical channel is one of logical channels associated with the N carriers, and the first logical channel set includes at least two of the logical channels associated with the N carriers.

Optionally, the first carrier is one of the following:
any one of the N carriers;
one of the N carriers where a PCS radio resource control (RRC) connection is located; and
a designated one of the N carriers.

Optionally, the first logical channel is one of the following:
any one of the logical channels associated with the N carriers;
one of the logical channels associated with the N carriers where a PCS RRC connection is located; and
a designated one of the logical channels associated with the N carriers.

Optionally, the maximum number of times of consecutive HARQ DTX is configured by a network device, or pre-configured by a terminal, or pre-defined by a protocol;
and/or
the maximum number of times of RLC retransmission is configured by a network device, or pre-configured by a terminal, or pre-defined by a protocol.

Optionally, the apparatus further includes at least one of the following:
a first determination module configured to determine that a radio link failure (RLF) occurs on the sidelink in a case that it is determined that the sidelink satisfies the carrier failure condition;
a first release module configured to release a PCS RRC connection corresponding to the sidelink in a case that it is determined that the sidelink satisfies the carrier failure condition; and
a first stop module configured to stop data transmission on the sidelink in a case that it is determined that the sidelink satisfies the carrier failure condition.

Optionally, the apparatus further includes at least one of the following:
a first maintaining module configured to maintain a PCS RRC connection of the sidelink in a case that it is determined that the sidelink satisfies the carrier failure condition;
a second stop module configured to stop sidelink transmission on a failed carrier in a case that it is determined that the sidelink satisfies the carrier failure condition; and
a first transmission module configured to initiate a carrier reselection process for the failed carrier or send first report information to a network device in a case that it is determined that the sidelink satisfies the carrier failure condition, where the first report information is used for indicating at least one of the failed carrier and a destination address of a sidelink corresponding to the failed carrier.

Optionally, a second carrier satisfying the carrier reselection condition includes at least one of the following:
a number of times of consecutive HARQ discontinuous transmission DTX of a HARQ entity associated with the second carrier reaching a corresponding maximum number of times of consecutive HARQ DTX;
a number of times of retransmission of an RLC entity associated with a second logical channel reaching a corresponding maximum number of times of RLC retransmission; and
a cumulative number of times of retransmission of RLC entities associated with all logical channels of a second logical channel set reaching the corresponding maximum number of times of RLC retransmission, or a number of times of retransmission of an RLC entity associated with each logical channel in the second logical channel set reaching the corresponding maximum number of times of RLC retransmission.

The second carrier is any one of the N carriers, the second logical channel is one of logical channels associated with the second carrier, and the second logical channel set includes at least two of the logical channels associated with the second carrier.

Optionally, the second logical channel is one of the following:
any one of the logical channels associated with the second carrier; and
a designated one of the logical channels associated with the second carrier.

Optionally, the apparatus further includes at least one of the following:
a second determination module configured to determine that a radio link failure (RLF) occurs on the sidelink in a case that it is determined that a third carrier satisfies the carrier reselection condition;
a second release module configured to release a PCS RRC connection corresponding to the sidelink in a case that it is determined that the third carrier satisfies the carrier reselection condition; and
a third stop module configured to stop data transmission on the sidelink in a case that it is determined that the third carrier satisfies the carrier reselection condition.

The third carrier is any one of the N carriers.

Optionally, the apparatus further includes at least one of the following:
a second maintaining module configured to maintain a PCS RRC connection of the sidelink in a case that it is determined that a fourth carrier satisfies the carrier reselection condition;
a fourth stop module configured to stop sidelink transmission on the fourth carrier; and
a second transmission module configured to initiate a carrier reselection process for the fourth carrier or send second report information to a network device, where the second report information is used for indicating at least one of a carrier that triggers carrier reselection and a destination address of a sidelink corresponding to the carrier that triggers carrier reselection.

The fourth carrier is any one of the N carriers.

The sidelink transmission processing apparatus according to this embodiment of the present application can realize various processes of the method embodiment in FIG. 2. Details are not described herein again so as to avoid repetition.

It is to be noted that the sidelink transmission processing apparatus according to this embodiment of the present application may be an apparatus or may be a component, an integrated circuit, or a chip in a terminal.

Referring to FIG. 6, FIG. 6 is a structural diagram of another sidelink transmission processing apparatus according to an embodiment of the present application. As shown in FIG. 6, the sidelink transmission processing apparatus 600 includes:
a sending module 601 configured to send at least one of a maximum number of times of consecutive HARQ DTX and a maximum number of times of retransmission to a terminal.

Optionally, different terminals correspond to different maximum numbers of times of consecutive HARQ DTX;
or
different sidelinks correspond to different maximum numbers of times of consecutive HARQ DTX;
   or
different carriers correspond to different maximum numbers of times of consecutive HARQ DTX;
   or
different HARQ entities correspond to different maximum numbers of times of consecutive HARQ DTX;
   or
different terminals correspond to a same maximum number of times of consecutive HARQ DTX;
   or
different sidelinks correspond to a same maximum number of times of consecutive HARQ DTX;
   or
different carriers correspond to a same maximum number of times of consecutive HARQ DTX;
   or
different HARQ entities correspond to a same maximum number of times of consecutive HARQ DTX.

Optionally, different terminals correspond to different maximum numbers of times of RLC retransmission;
or
different sidelinks correspond to different maximum numbers of times of RLC retransmission;
   or
different RLC entities correspond to different maximum numbers of times of RLC retransmission;
   or
different terminals correspond to a same maximum number of times of RLC retransmission;
   or
different sidelinks correspond to a same maximum number of times of RLC retransmission;
   or
different RLC entities correspond to a same maximum number of times of RLC retransmission.

Optionally, the apparatus further includes:
a receiving module configured to receive report information sent by the terminal.

The report information is used for indicating at least one of a failed carrier and a destination address of a sidelink corresponding to the failed carrier, or the report information is used for indicating at least one of a carrier that triggers carrier reselection and a destination address of a sidelink corresponding to the carrier that triggers carrier reselection.

The sidelink transmission processing apparatus according to this embodiment of the present application can realize various processes of the method embodiment in FIG. 4. Details are not described herein again so as to avoid repetition.

It is to be noted that the sidelink transmission processing apparatus according to this embodiment of the present application may be an apparatus or may be a component, an integrated circuit, or a chip in a network device.

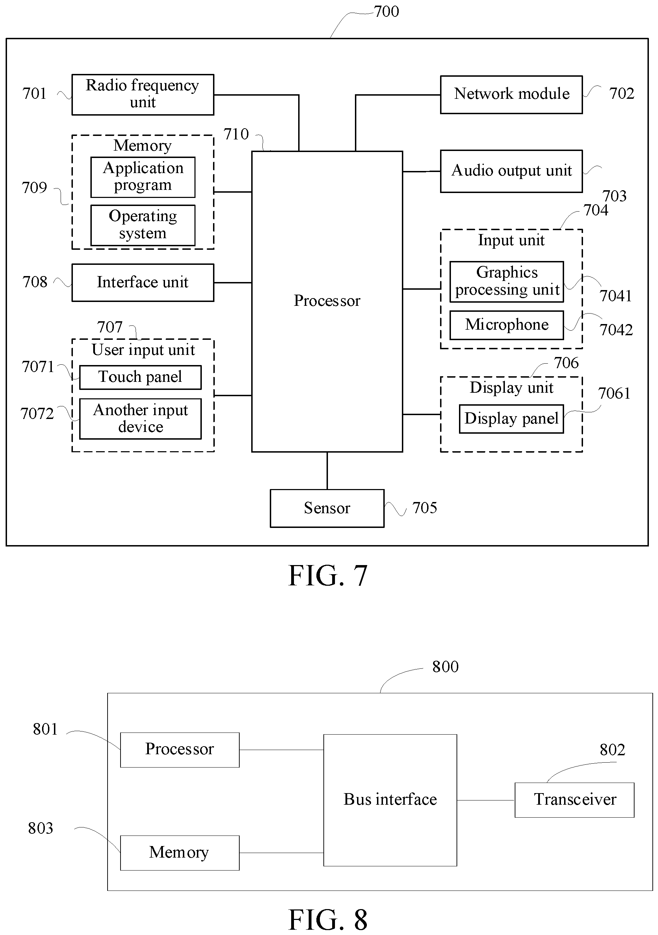

Referring to FIG. 7, FIG. 7 is a structural diagram of a terminal according to an embodiment of the present application. As shown in FIG. 7, the terminal 700 includes, but is not limited to, a radio frequency unit 701, a network module 702, and an audio output unit 703, an input unit 704, a sensor 705, a display unit 706, a user input unit 707, an interface unit 708, a memory 709, a processor 710, and other components.

A person skilled in the art may understand that the terminal 700 may further include a power supply (such as a battery) for supplying power to various components. The power supply may be logically connected to the processor 710 through a power management system, so as to implement functions such as management of charging, management of discharging, and power consumption management through the power management system. The structure of the terminal shown in FIG. 7 does not constitute a limitation on the terminal, and the terminal may include more or fewer components than shown in the figure, or some combined components, or different arrangements of components. Details are not described herein again.

It is to be understood that, in this embodiment of the present application, the input unit 704 may include a graphics processing unit (Graphics Processing Unit, GPU) 7041 and a microphone 7042, and the graphics processing unit 7041 processes image data of a still picture or video obtained by an image capture device (such as a camera) in a video capture mode or an image capture mode. The display unit 706 may include the display panel 7061, and the display panel 7061 may be configured in the form of a liquid crystal display, an organic light-emitting diode, or the like. The user input unit 707 includes a touch panel 7071 and another input device 7072. The touch panel 7071 is also referred to as a touch screen. The touch panel 7071 may include two parts, namely a touch detection device and a touch controller. The another input device 7072 may include, but are not limited to, a physical keyboard, a function key (such as a volume control key or an on/off key), a trackball, a mouse, and a joystick. Details are not described herein again.

In this embodiment of the present application, the radio frequency unit 701 receives downlink data from a network device and then sends the downlink data to the processor 710 for processing. In addition, uplink data is sent to the network device. Generally, the radio frequency unit 701 includes, but is not limited to, an antenna, at least one amplifier, a transceiver, a coupler, a low-noise amplifier, a duplexer, and the like.

The memory 709 may be configured to store software programs or instructions and various data. The memory 709 may mainly include a program or instruction storage area and a data storage area. The program or instruction storage area may store an operating system, an application program or instruction (such as a sound playback function or an image playback function) required for at least one function, and the like. In addition, the memory 709 may include a high-speed random access memory, and may further include a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory, such as at least one magnetic disk storage device, a flash storage device, or other volatile solid-state storage device.

The processor 710 may include one or more processing units. Optionally, the processor 710 may integrate an application processor and a modem processor. The application processor mainly processes an operating system, a user interface, an application program or instruction, and the like. The modem processor mainly processes wireless communication, such as a baseband processor. It may be understood that, alternatively, the above modem processor may not be integrated into the processor 710.

The processor 710 is configured to, in a case that a sidelink is transmitted based on N carriers, determine, according to first entities associated with some or all of the N carriers, whether the sidelink satisfies a carrier failure condition, or determine, according to a first entity associated with each of the N carriers, whether the corresponding carrier satisfies a carrier reselection condition.

N is an integer greater than 1, and the first entity includes at least one of a hybrid automatic repeat request (HARQ) entity and a radio link control (RLC) entity.

It is to be understood that, in this embodiment, the processor 710 and the radio frequency unit 701 above can realize various processes realized by the terminal in the method embodiment in FIG. 2, and can achieve a same technical effect. Details are not described herein again so as to avoid repetition.

Optionally, an embodiment of the present application further provides a terminal 700, including a processor 710, a memory 709, and a computer program or instruction stored in the memory 709 and capable of running on the processor 710. When the program or instruction is executed by the processor 710, various processes in the embodiment of the sidelink transmission processing method are realized, and a same technical effect can be achieved. Details are not described herein again so as to avoid repetition.

Referring to FIG. 8, FIG. 8 is a structural diagram of a network device according to an embodiment of the present application. The network device 800 includes: a processor 801, a transceiver 802, a memory 803, and a bus interface.

The transceiver 802 is configured to send at least one of a maximum number of times of consecutive HARQ DTX and a maximum number of times of retransmission to a terminal.

It is to be understood that, in this embodiment, the processor 801 and the transceiver 802 above can realize various processes realized by the network device in the method embodiment in FIG. 4, and can achieve a same technical effect. Details are not described herein again so as to avoid repetition.

It is to be noted that the transceiver 802 is configured to receive and send data under control of the processor 801. The transceiver 802 includes at least two antenna ports.

In FIG. 8, a bus architecture may include any number of interconnected buses and bridges, specifically various circuits of one or more processors represented by the processor 801 and a memory represented by the memory 803 linked together. The bus architecture may also link together various other circuits, such as peripherals, voltage regulators, and power management circuits, which are well known in the art, and thus will not be further described herein. The bus interface provides an interface. The transceiver 802 may be a plurality of elements, i.e., including a transmitter and a receiver, providing a unit for communicating with various other apparatuses over a transmission medium. For different user equipments, a user interface 804 may also be an interface capable of externally connecting and internally connecting required devices. The connected devices include, but are not limited to, a keypad, a display, a speaker, a microphone, a joystick, and the like.

The processor 801 is responsible for managing the bus architecture and general processing, and the memory 803 may store data used by the processor 801 when performing operations.

Optionally, an embodiment of the present application further provides a network device, including a processor 801, a memory 803, and a computer program or instruction stored in the memory 803 and capable of running on the processor 801. When the program or instruction is executed by the processor 801, various processes in the embodiment of the sidelink transmission processing method are realized, and a same technical effect can be achieved. Details are not described herein again so as to avoid repetition.

An embodiment of the present application further provides a readable storage medium. The readable storage medium stores a program or instruction. When the program or instruction is executed by the processor, various processes in the embodiment of the sidelink transmission processing method on the side of the terminal or the sidelink transmission processing method on the side of the network device are realized, and a same technical effect can be achieved. Details are not described herein again so as to avoid repetition.

The processor is the processor in the electrode device in the above embodiment. The readable storage medium includes a computer-readable storage medium, such as a computer read-only memory (Read-Only Memory, ROM), a random access memory (RAM), a magnetic disk, an optical disk, or the like. The readable storage medium may be volatile or non-volatile. In addition, the readable storage medium may be non-transient.

An embodiment of the present application further provides a chip. The chip includes a processor and a communication interface. The communication interface is coupled to the processor. The processor is configured to run a program or instruction of a network device to realize various processes in the embodiment of the sidelink transmission processing method on the side of the terminal or the sidelink transmission processing method on the side of the network device, and a same technical effect can be achieved. Details are not described herein again so as to avoid repetition.

It is to be understood that the chip mentioned in this embodiment of this application may also be referred to as a system-level chip, a system chip, a chip system, a system on chip, or the like.

It is to be noted that, herein, the term "include", "comprise" or any other variant thereof is intended to cover non-exclusive inclusions, so that a process, a method, an item, or an apparatus that includes a series of elements includes not only those elements, but also other elements that are not explicitly listed, or inherent elements of the process, the method, the item, or the apparatus. Without further restrictions, an element defined by a statement "including/comprising one ..." does not exclude existence of an additional identical element in the process, the method, the item, or the apparatus that includes the element. In addition, it is to be noted that scopes of the methods and apparatuses in the embodiments of the present application are not limited to performing the functions in the order shown or discussed, and may also include performing the functions in a basically simultaneous manner or in a reverse order in accordance with the functions involved. For example, the described methods may be performed in a different order from the described order, and various steps may be added, omitted, or combined. In addition, features described with reference to some examples may be combined in other examples.

Through the above description, a person skilled in the art may clearly understand that the methods in the above embodiments may be implemented by means of software and a necessary general hardware platform, or by hardware, and the former may be better in most cases. Based on this, essence of the technical solutions of the present application or part of the technical solutions of the present application contributing to the existing technology may be embodied in the form of a software product. The computer software product may be stored in a storage medium (such as an ROM/RAM, a magnetic disk, or an optical disk) and include several instructions to enable a terminal (which may be a mobile phone, a computer, a server, an air conditioner, a base station, or the like) to perform the method according to the embodiments of the present application.

The embodiments of the present application are described above with reference to the accompanying drawings, but the present application is not limited to the foregoing specific implementations. The foregoing specific implementations are merely exemplary instead of restrictive. Under enlightenment of the present application, a person of ordinary skill in the art may make many forms without departing from the purpose of the present application and the protection scope of the claims, all of which fall within the protection of the present application.

## Claims

1. A sidelink transmission processing method, performed by a terminal, the method comprising:
in a case that a sidelink is transmitted based on N carriers, determining, according to first entities associated with some or all of the N carriers, whether the sidelink satisfies a carrier failure condition, or determining, according to a first entity associated with each of the N carriers, whether the corresponding carrier satisfies a carrier reselection condition;
wherein N is an integer greater than 1, and the first entity comprises at least one of a hybrid automatic repeat request (HARQ) entity and a radio link control (RLC) entity.

2. The method according to claim 1, wherein the sidelink satisfying a carrier failure condition comprises at least one of the following:
a number of times of consecutive HARQ discontinuous transmission DTX of a HARQ entity associated with the first carrier reaching a corresponding maximum number of times of consecutive HARQ DTX;
a cumulative number of times of consecutive HARQ DTX of HARQ entities associated with all carriers of a first carrier set reaching the corresponding maximum number of times of consecutive HARQ DTX, or a number of times of consecutive HARQ DTX of a HARQ entity associated with each carrier in the first carrier set reaching the corresponding maximum number of times of consecutive HARQ DTX;
a number of times of retransmission of an RLC entity associated with a first logical channel reaching a corresponding maximum number of times of RLC retransmission; and
a cumulative number of times of retransmission of RLC entities associated with all logical channels of a first logical channel set reaching the corresponding maximum number of times of RLC retransmission, or a number of times of retransmission of an RLC entity associated with each logical channel in the first logical channel set reaching the corresponding maximum number of times of RLC retransmission;
wherein the first carrier is one of the N carriers, the first carrier set comprises at least two of the N carriers, the first logical channel is one of logical channels associated with the N carriers, and the first logical channel set comprises at least two of the logical channels associated with the N carriers.

3. The method according to claim 2, wherein the first carrier is one of the following:
any one of the N carriers;
one of the N carriers where a PCS radio resource control (RRC) connection is located; and
a designated one of the N carriers.

4. The method according to claim 2, wherein the first logical channel is one of the following:
any one of the logical channels associated with the N carriers;
one of the logical channels associated with the N carriers where a PCS RRC connection is located; and
a designated one of the logical channels associated with the N carriers.

5. The method according to claim 2, wherein the maximum number of times of consecutive HARQ DTX is configured by a network device, or pre-configured by the terminal, or specified by a protocol;
and/or
the maximum number of times of RLC retransmission is configured by a network device, or pre-configured by the terminal, or specified by a protocol.

6. The method according to claim 1, wherein, in a case that it is determined that the sidelink satisfies the carrier failure condition, the method further comprises at least one of the following:
determining that a radio link failure (RLF) occurs on the sidelink;
releasing a PCS RRC connection corresponding to the sidelink; and
stopping data transmission on the sidelink.

7. The method according to claim 1, wherein, in a case that it is determined that the sidelink satisfies the carrier failure condition, the method further comprises at least one of the following:
maintaining a PCS RRC connection of the sidelink;
stopping sidelink transmission on a failed carrier; and
initiating a carrier reselection process for the failed carrier or sending first report information to a network device, wherein the first report information is used for indicating at least one of the failed carrier and a destination address of a sidelink corresponding to the failed carri er.

8. The method according to claim 1, wherein a second carrier satisfying the carrier reselection condition comprises at least one of the following:
a number of times of consecutive HARQ discontinuous transmission DTX of a HARQ entity associated with the second carrier reaching a corresponding maximum number of times of consecutive HARQ DTX;
a number of times of retransmission of an RLC entity associated with a second logical channel reaching a corresponding maximum number of times of RLC retransmission; and
a cumulative number of times of retransmission of RLC entities associated with all logical channels of a second logical channel set reaching the corresponding maximum number of times of RLC retransmission, or a number of times of retransmission of an RLC entity associated with each logical channel in the second logical channel set reaching the corresponding maximum number of times of RLC retransmission;
wherein the second carrier is any one of the N carriers, the second logical channel is one of logical channels associated with the second carrier, and the second logical channel set comprises at least two of the logical channels associated with the second carrier.

9. The method according to claim 8, wherein the second logical channel is one of the following:
any one of the logical channels associated with the second carrier; and
a designated one of the logical channels associated with the second carrier.

10. The method according to claim 1, wherein, in a case that it is determined that a third carrier satisfies the carrier reselection condition, the method further comprises at least one of the following:
determining that a radio link failure (RLF) occurs on the sidelink;
releasing a PCS RRC connection corresponding to the sidelink; and
stopping data transmission on the sidelink;
wherein the third carrier is any one of the N carriers.

11. The method according to claim 1, wherein, in a case that it is determined that a fourth carrier satisfies the carrier reselection condition, the method further comprises at least one of the following:
maintaining a PCS RRC connection of the sidelink;
stopping sidelink transmission on the fourth carrier; and
initiating a carrier reselection process for the fourth carrier or sending second report information to a network device, wherein the second report information is used for indicating at least one of a carrier that triggers carrier reselection and a destination address of a sidelink corresponding to the carrier that triggers carrier reselection;
wherein the fourth carrier is any one of the N carriers.

12. A sidelink transmission processing method, performed by a network device, the method comprising:
sending at least one of a maximum number of times of consecutive HARQ DTX and a maximum number of times of retransmission to a terminal.

13. The method according to claim 12, wherein
different terminals correspond to different maximum numbers of times of consecutive HARQ DTX;
or
different sidelinks correspond to different maximum numbers of times of consecutive HARQ DTX;
or
different carriers correspond to different maximum numbers of times of consecutive HARQ DTX;
or
different HARQ entities correspond to different maximum numbers of times of consecutive HARQ DTX;
or
different terminals correspond to a same maximum number of times of consecutive HARQ DTX;
or
different sidelinks correspond to a same maximum number of times of consecutive HARQ DTX;
or
different carriers correspond to a same maximum number of times of consecutive HARQ DTX;
or
different HARQ entities correspond to a same maximum number of times of consecutive HARQ DTX.

14. The method according to claim 12, wherein
different terminals correspond to different maximum numbers of times of RLC retransmission;
or
different sidelinks correspond to different maximum numbers of times of RLC retransmission;
or
different RLC entities correspond to different maximum numbers of times of RLC retransmission;
or
different terminals correspond to a same maximum number of times of RLC retransmission;
or
different sidelinks correspond to a same maximum number of times of RLC retransmission;
or
different RLC entities correspond to a same maximum number of times of RLC retransmission.

15. The method according to claim 12, wherein the method further comprises:
receiving report information sent by the terminal;
wherein the report information is used for indicating at least one of a failed carrier and a destination address of a sidelink corresponding to the failed carrier, or the report information is used for indicating at least one of a carrier that triggers carrier reselection and a destination address of a sidelink corresponding to the carrier that triggers carrier reselection.

16. A sidelink transmission processing apparatus, the apparatus comprising:
a judgment module configured to, in a case that a sidelink is transmitted based on N carriers, determine, according to first entities associated with some or all of the N carriers, whether the sidelink satisfies a carrier failure condition, or determine, according to a first entity associated with each of the N carriers, whether the corresponding carrier satisfies a carrier reselection condition;
wherein N is an integer greater than 1, and the first entity comprises at least one of a hybrid automatic repeat request (HARQ) entity and a radio link control (RLC) entity.

17. The apparatus according to claim 16, wherein the sidelink satisfying a carrier failure condition comprises at least one of the following:
a number of times of consecutive HARQ discontinuous transmission DTX of a HARQ entity associated with the first carrier reaching a corresponding maximum number of times of consecutive HARQ DTX;
a cumulative number of times of consecutive HARQ DTX of HARQ entities associated with all carriers of a first carrier set reaching the corresponding maximum number of times of consecutive HARQ DTX, or a number of times of consecutive HARQ DTX of a HARQ entity associated with each carrier in the first carrier set reaching the corresponding maximum number of times of consecutive HARQ DTX;
a number of times of retransmission of an RLC entity associated with a first logical channel reaching a corresponding maximum number of times of RLC retransmission; and
a cumulative number of times of retransmission of RLC entities associated with all logical channels of a first logical channel set reaching the corresponding maximum number of times of RLC retransmission, or a number of times of retransmission of an RLC entity associated with each logical channel in the first logical channel set reaching the corresponding maximum number of times of RLC retransmission;
wherein the first carrier is one of the N carriers, the first carrier set comprises at least two of the N carriers, the first logical channel is one of logical channels associated with the N carriers, and the first logical channel set comprises at least two of the logical channels associated with the N carriers.

18. The apparatus according to claim 17, wherein the first carrier is one of the following:
any one of the N carriers;
one of the N carriers where a PCS radio resource control (RRC) connection is located; and
a designated one of the N carriers.

19. The apparatus according to claim 17, wherein the first logical channel is one of the following:
any one of the logical channels associated with the N carriers;
one of the logical channels associated with the N carriers where a PCS RRC connection is located; and
a designated one of the logical channels associated with the N carriers.

20. The apparatus according to claim 17, wherein the maximum number of times of consecutive HARQ DTX is configured by a network device, or pre-configured by a terminal, or pre-defined by a protocol;
and
the maximum number of times of RLC retransmission is configured by a network device, or pre-configured by a terminal, or pre-defined by a protocol.

21. The apparatus according to claim 16, wherein the apparatus further comprises at least one of the following:
a first determination module configured to determine that a radio link failure (RLF) occurs on the sidelink in a case that it is determined that the sidelink satisfies the carrier failure condition;
a first release module configured to release a PCS RRC connection corresponding to the sidelink in a case that it is determined that the sidelink satisfies the carrier failure condition; and
a first stop module configured to stop data transmission on the sidelink in a case that it is determined that the sidelink satisfies the carrier failure condition.

22. The apparatus according to claim 16, wherein the apparatus further comprises at least one of the following:
a first maintaining module configured to maintain a PCS RRC connection of the sidelink in a case that it is determined that the sidelink satisfies the carrier failure condition;
a second stop module configured to stop sidelink transmission on a failed carrier in a case that it is determined that the sidelink satisfies the carrier failure condition; and
a first transmission module configured to initiate a carrier reselection process for the failed carrier or send first report information to a network device in a case that it is determined that the sidelink satisfies the carrier failure condition, wherein the first report information is used for indicating at least one of the failed carrier and a destination address of a sidelink corresponding to the failed carrier.

23. The apparatus according to claim 16, wherein a second carrier satisfying the carrier reselection condition comprises at least one of the following:
a number of times of consecutive HARQ discontinuous transmission DTX of a HARQ entity associated with the second carrier reaching a corresponding maximum number of times of consecutive HARQ DTX;
a number of times of retransmission of an RLC entity associated with a second logical channel reaching a corresponding maximum number of times of RLC retransmission; and
a cumulative number of times of retransmission of RLC entities associated with all logical channels of a second logical channel set reaching the corresponding maximum number of times of RLC retransmission, or a number of times of retransmission of an RLC entity associated with each logical channel in the second logical channel set reaching the corresponding maximum number of times of RLC retransmission;
wherein the second carrier is any one of the N carriers, the second logical channel is one of logical channels associated with the second carrier, and the second logical channel set comprises at least two of the logical channels associated with the second carrier.

24. The apparatus according to claim 23, wherein the second logical channel is one of the following:
any one of the logical channels associated with the second carrier; and
a designated one of the logical channels associated with the second carrier.

25. The apparatus according to claim 16, wherein the apparatus further comprises at least one of the following:
a second determination module configured to determine that a radio link failure (RLF) occurs on the sidelink in a case that it is determined that a third carrier satisfies the carrier reselection condition;
a second release module configured to release a PCS RRC connection corresponding to the sidelink in a case that it is determined that the third carrier satisfies the carrier reselection condition; and
a third stop module configured to stop data transmission on the sidelink in a case that it is determined that the third carrier satisfies the carrier reselection condition;
wherein the third carrier is any one of the N carriers.

26. The apparatus according to claim 16, wherein the apparatus further comprises at least one of the following:
a second maintaining module configured to maintain a PCS RRC connection of the sidelink in a case that it is determined that a fourth carrier satisfies the carrier reselection condition;
a fourth stop module configured to stop sidelink transmission on the fourth carrier; and
a second transmission module configured to initiate a carrier reselection process for the fourth carrier or send second report information to a network device, wherein the second report information is used for indicating at least one of a carrier that triggers carrier reselection and a destination address of a sidelink corresponding to the carrier that triggers carrier reselection;
wherein the fourth carrier is any one of the N carriers.

27. A sidelink transmission processing apparatus, the apparatus comprising:
a sending module configured to send at least one of a maximum number of times of consecutive HARQ DTX and a maximum number of times of retransmission to a terminal.

28. The apparatus according to claim 27, wherein
different terminals correspond to different maximum numbers of times of consecutive HARQ DTX;
or
different sidelinks correspond to different maximum numbers of times of consecutive HARQ DTX;
or
different carriers correspond to different maximum numbers of times of consecutive HARQ DTX;
or
different HARQ entities correspond to different maximum numbers of times of consecutive HARQ DTX;
or
different terminals correspond to a same maximum number of times of consecutive HARQ DTX;
or
different sidelinks correspond to a same maximum number of times of consecutive HARQ DTX;
or
different carriers correspond to a same maximum number of times of consecutive HARQ DTX;
or
different HARQ entities correspond to a same maximum number of times of consecutive HARQ DTX.

29. The apparatus according to claim 27, wherein
different terminals correspond to different maximum numbers of times of RLC retransmission;
or
different sidelinks correspond to different maximum numbers of times of RLC retransmission;
or
different RLC entities correspond to different maximum numbers of times of RLC retransmission;
or
different terminals correspond to a same maximum number of times of RLC retransmission;
or
different sidelinks correspond to a same maximum number of times of RLC retransmission;
or
different RLC entities correspond to a same maximum number of times of RLC retransmission.

30. The apparatus according to claim 27, wherein the apparatus further comprises:
a receiving module configured to receive report information sent by the terminal;
wherein the report information is used for indicating at least one of a failed carrier and a destination address of a sidelink corresponding to the failed carrier, or the report information is used for indicating at least one of a carrier that triggers carrier reselection and a destination address of a sidelink corresponding to the carrier that triggers carrier reselection.

31. A terminal, comprising: a memory, a processor, and a program or instruction stored in the memory and capable of running on the processor, wherein steps in the sidelink transmission processing method according to any one of claims 1 to 11 are implemented when the program or instruction is executed by the processor.

32. A network device, comprising: a memory, a processor, and a program or instruction stored in the memory and capable of running on the processor, wherein steps in the sidelink transmission processing method according to any one of claims 12 to 15 are implemented when the program or instruction is executed by the processor.

33. A readable storage medium, the readable storage medium storing a program or instruction, wherein steps of the sidelink transmission processing method according to any one of claims 1 to 11 are implemented when the program or instruction is executed by a processor, or steps of the sidelink transmission processing method according to any one of claims 12 to 15 are implemented when the program or instruction is executed by the processor.

34. A chip, comprising a processor and a communication interface, wherein the communication interface is coupled to the processor, and the processor is configured to run a program or instruction to implement steps of the sidelink transmission processing method according to any one of claims 1 to 11, or when the program or instruction is executed by the processor, steps of the sidelink transmission processing method according to any one of claims 12 to 15 are implemented.

35. A computer program product, wherein the program product is stored in a non-volatile storage medium, and the program product is executed by at least one processor to implement steps of the sidelink transmission processing method according to any one of claims 1 to 11, or steps of the sidelink transmission processing method according to any one of claims 12 to 15 are implemented when the program product is executed by the processor.
